# EUROPEAN PATENT SPECIFICATION

(11) **EP 3 183 112 B1**
(45) Date of publication and mention of the grant of the patent: **20.03.2019**
(21) Application number: 15834493.7
(22) Date of filing: 19.08.2015
(51) Int. Cl.: B29C 65/18, B29C 65/56, B32B 3/28, B32B 7/04, B32B 27/06, B32B 27/30, B29C 65/60, B29C 65/78

(54) **METHOD AND APPARATUS FOR BONDING FILL SHEETS**
VERFAHREN UND VORRICHTUNG ZUR VERBINDUNG VON FOLIEN
PROCÉDÉ ET APPAREIL POUR RELIER DES FEUILLES

(30) Priority: 19.08.2014 US 201462039110 P
(43) Date of publication of application: 28.06.2017
(73) Proprietor: Evapco, Inc., Taneytown, MD 21787 (US)
(72) Inventor: VADDER, Davey, Taneytown, Maryland 21787 (US); KANE, Jeff, Taneytown, Maryland 21787 (US)
(74) Representative: Barker Brettell LLP
(86) International application number: PCT/US2015/045888
(87) International publication number: WO 2016/028890

(56) References cited:
- EP-A1- 0 564 695
- WO-A2-01/20241
- DE-A1- 3 925 746
- DE-A1-102006 061 043
- US-A- 3 798 299
- US-A- 4 419 566
- US-A- 5 483 040
- US-A1- 2012 061 011
- US-B1- 6 176 955

## Description

### Field of the Invention

This invention relates to methods and apparatuses for bonding fill sheets.

### Background of the Invention

It is well known that film-type cooling tower fill packs are stronger and easier to install when the sheets are bonded together well. Some fill sheet bonding techniques include chemical welding, snap buttons, rods, screws, nails, and thermal bonding. Chemical welding is the most common and is also usually the strongest, but requires the use of solvents and a flash time for the bond to set. Chemical welding is usually performed at a different location from the installation due to restrictions on solvents and the extreme amount of time necessary to allow the pack to cure. Snap buttons can be used at the installation site, but the joints are easily detached. Rods, screws, and nails require additional parts to be added to the pack, which increases cost. These joints are also not as substantial as chemical welding. Thermal bonding has, until this invention, been difficult to achieve a satisfactory bond. Existing methods also have difficulty reaching the interior bond sites in the pack, leading to a weak pack. This invention overcomes the current limitations for on-site bonding as well as producing a factory bond that eliminates the need for solvents.

US 3798299 and DE 3 925 746 disclose thermal bonding methods involving making a strong joint relating to the shape of an undercut using the pressure of a counter-tool.

US 3798299 discloses a thermal bonding method comprising: placing alternating film fill sheets on a stack; plunging the bonding tip vertically onto a bond site on the fill sheet; and removing the bonding tip from the joint.

DE 3925746 discloses a bonding device comprising: a rounded bonding tip extending through a bushing; a spring mechanism attached to the bonding tip to provide a resistance force; and a sliding mechanism allowing the bonding tip to move vertically.

### Summary of the Invention

The method presented herein distinguishes itself from other methods by allowing multiple sheets to be stack-bonded without any backing behind the sheet. This is accomplished through the implementation of an insulating bushing that holds the sheets down while the bond site is melted, plus an air pulse that forces the sheets together when the tip is retracted. Existing processes can only completely bond two sheets at a time. These two sheet assemblies are then attached to each other only by the edges. Our invention provides a full field of bonding sites to every sheet in the stack.

According to an embodiment of the invention, a thermal bonding device is used thermally weld fill sheets together. A special bonding tip design provides a method and apparatus to create a hemispherical bond that unites two fill sheets together without the need of a backing die, allowing the fill pack to be created in any thickness while reaching each and every bond site within the pack.

Accordingly, there is provided according to the invention, a thermal bonding method having the steps:
a. placing alternating film fill sheets on a stack;
b. heating a hemispherical bonding tip to the melting point of the fill sheet;
c. plunging the bonding tip vertically onto a bond site on the fill sheet until the spring is compressed;
d. waiting a specified amount of time for the tip to melt into the fill sheet down to the insulating bushing;
e. the insulating bushing providing a positive stop to position the bond tip;
f. providing a pulse of air through the bonding tip that pushes the melted sheets together; and
g. removing the bonding tip from the joint so the bond can cool.

Different fill sheet thicknesses, environmental temperature, and plastic change the melting time. According to a preferred embodiment, a melt time of 5-10 seconds may be used on 10 mil PVC at 65°-85°F air temperature.

The method may be carried out with specific durations for each step, and some steps can occur simultaneously. According to one embodiment, the steps of placing, heating, and plunging all happen at the same time. Additionally, the air pulsing step may happen at the same time as removal. The method may be carried out with specific pressure and duration of air through the tip that may "bubble-out" the bond site. The pressure and duration of air depends on the material thickness, type of plastic, and ambient temperature. According to one embodiment, 60 psi may be applied to the air manifolds and the pressure at the bond site varies from 1-20 psi for about 1 second.

According to another embodiment of the invention, there is provided a thermal bonding device having:
a. a hemispherical bonding tip extending through an insulating bushing;
b. a heater block to provide the temperature necessary to heat the bonding tip to a level near the melting point of the fill sheet;
c. a spring mechanism attached to the bonding tip to provide a resistance force;
d. a sliding mechanism allowing the bonding tip to move vertically; and
e. an air conduit to provide a pulse of air to the bond zone;

According to further embodiments, the device may have a ship's hull shaped tip. According to further embodiments, the device may be provided with a weight to provide resistance to the bond tip. And according to further embodiments, the device may be provided with different insulating bushing shapes. According to one embodiment, the bushing may be 3/8" outside diameter with a ¼" inside diameter. The bushing may be changed from the illustrated "pipe" shape to an elliptical shape to provide more insulator surface area in odd shaped fill geometries.

The invention may be used with all plastic fill materials and with both counterflow and crossflow fill designs.

### Description of the Drawings

The subsequent description of the preferred embodiments of the present invention refers to the attached drawings, wherein:
Figure 1 is a schematic showing the major components of a fill bonding apparatus according to an embodiment of the invention.
Figure 2 shows a cross-sectional view of the thermal bonding tip according to an embodiment of the invention.
Figure 3 shows an outside perspective view of the thermal bonding tip according to an embodiment of the invention.
Figures 4a through 4i show the sequence of operation for placing fill sheets and creating the bond according to an embodiment of the invention.
Figures 5a through 5e show the sequence of operation for the bonding tip according to an embodiment of the invention.

### Detailed Description of the Invention

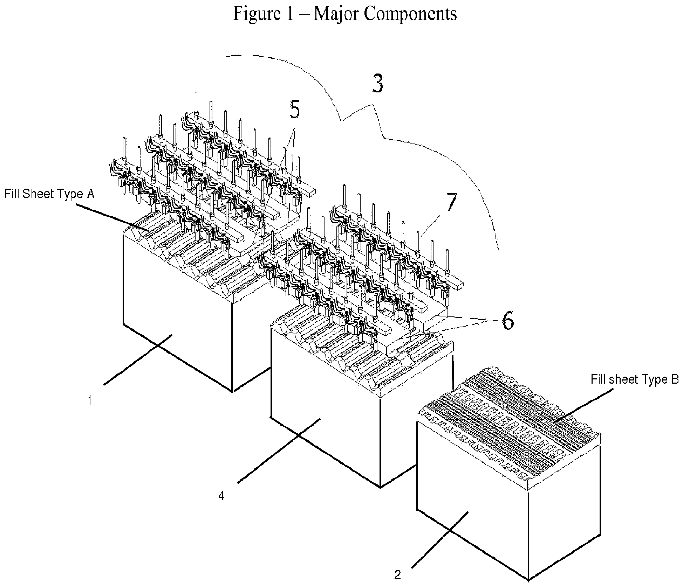

Figure 1 shows the major components of the fill bonding apparatus. Two different sheet types, Type A and Type B, are loaded onto feeder trays 1 and 2, respectively. Gantry 3 moves horizontally to pick and place sheets type A and B, alternately, on the fill stack 4. Vacuum chucks 5 and 6 remove the sheets from the stacks 1 and 2. Arrays of thermal bonding tips 7 weld the sheets together when they are placed on the fill stack 4.

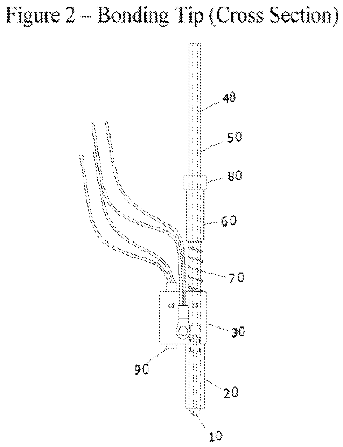

Figure 2 illustrates the main parts of the thermal bonding device. Hemispherical tip 10 extends through insulator and holding bushing 20. Heater block 30 provides heat to the tip 10. Air passage 40 extends through heater block 30 and rod 50 to provide a conduit for pressurized air to the tip 10. Rod 50 extends vertically through slide bushing 60 to allow vertical movement of the heater block, tip, and rod. Spring 70 provides vertical force resistance to movement of tip 10. Collar 80 is fixed to tip 10 and provides a positive vertical stop to the motion of the tip. Heat sensing device 90 provides feedback to control the temperature of the tip 10.

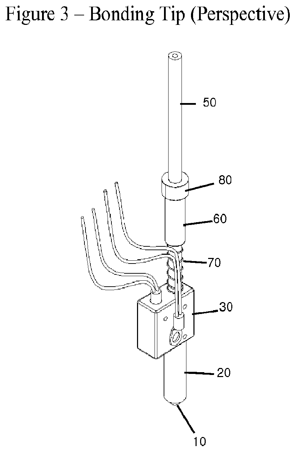

Figure 3 illustrates an isometric view of the thermal bonding apparatus.

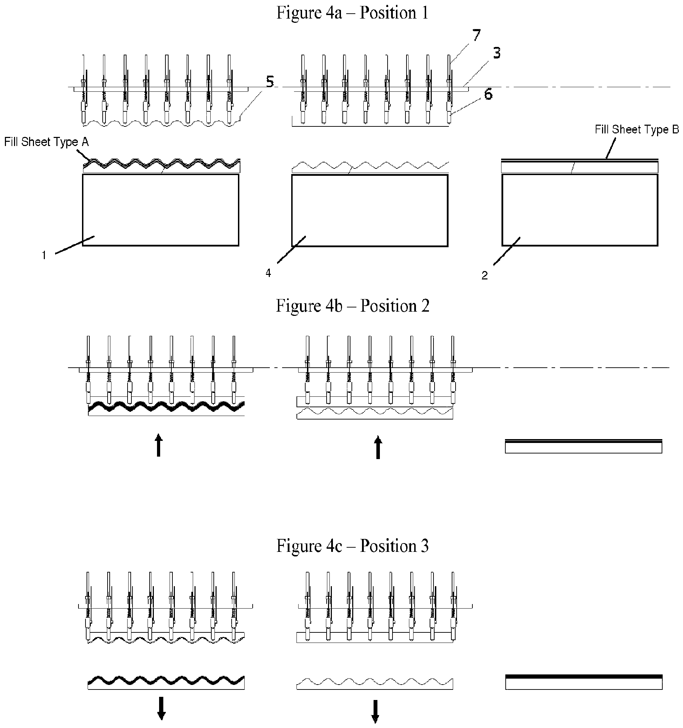

Figure 4a is an elevation view of the fill bonding apparatus illustrating the starting position in the sequence of operation with parts labeled as in figure 1.

Figure 4b illustrates simultaneously raising the stacking tray 4 and the sheet type A feeder tray 1. Sheet type A is loaded into the gantry 3 and held in place by the vacuum chuck 5.

Figure 4c illustrates simultaneously lowering the sheet type A feeder tray 1 and stacking tray 4 while sheet type A is in the loaded position.

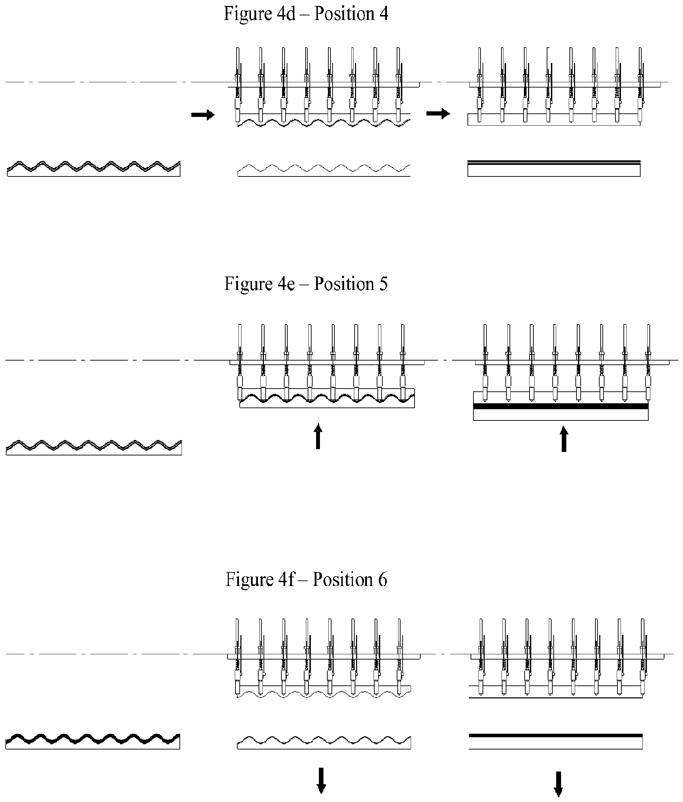

Figure 4d illustrates moving the gantry 3 to the sheet type B loading position and sheet type A stack placing position.

Figure 4e illustrates simultaneously raising the stacking tray 4 and sheet type B feeder tray 2. Sheet type B is loaded into the gantry 3 and held in place by the vacuum chuck 5. Sheet type A is released by the vacuum chuck and placed on the stacking tray 4.

Figure 4f illustrates simultaneously lowering the sheet type B feeder tray 2 and stacking tray 4 while sheet type B is in the loaded position.

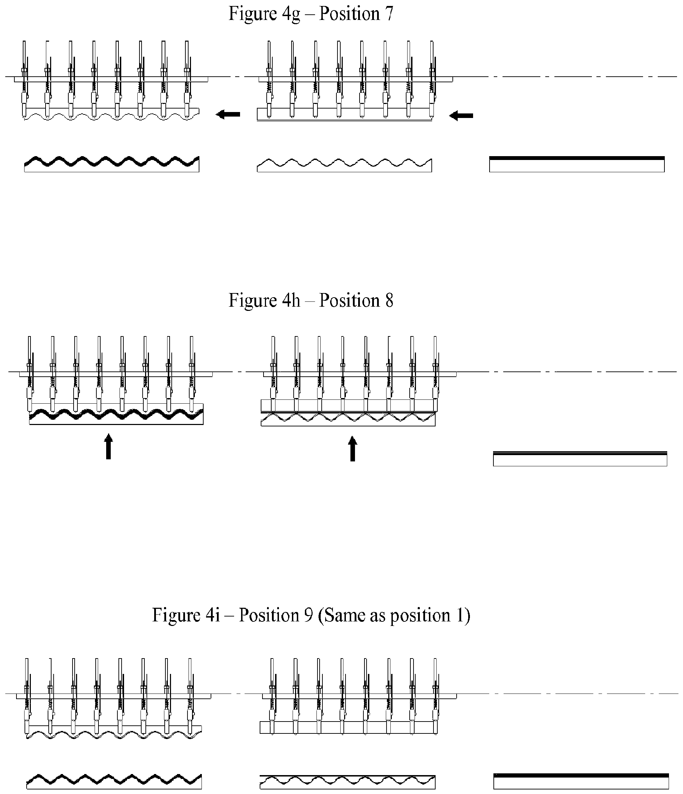

Figure 4g illustrates moving the gantry 3 to the sheet type A bonding position and sheet type B stack placing position

Figure 4h illustrates simultaneously raising the stacking tray 4 and sheet type A feeder tray 1. Sheet type A is loaded into the gantry 3 and held in place by the vacuum chuck 5. Sheet type A and sheet type B are bonded together on the stacking tray 4. This is the same position shown in Figure 4b except bonding is being performed.

Figure 4i illustrates returning the sheet type A feeder and stacking tray to the start position as illustrated in figure 4c which shows the gantry 3 loaded with sheet type A.

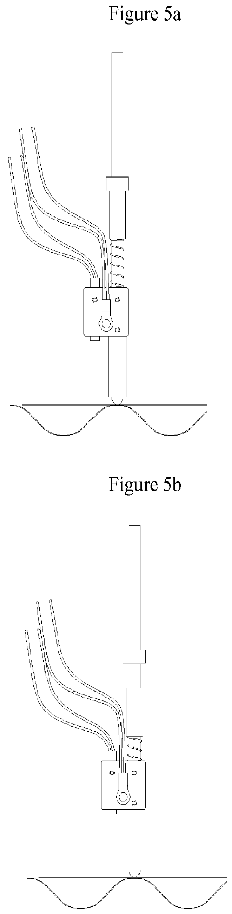

Figure 5a illustrates the bonding tip just contacting the fill stack as the fill stack moves up. The bond tip heated. This occurs in position 8 of the machine.

Figure 5b illustrates the bonding tip being pushed up as the fill stack continues to move up. This compresses the spring and puts downward pressure on the bonding tip

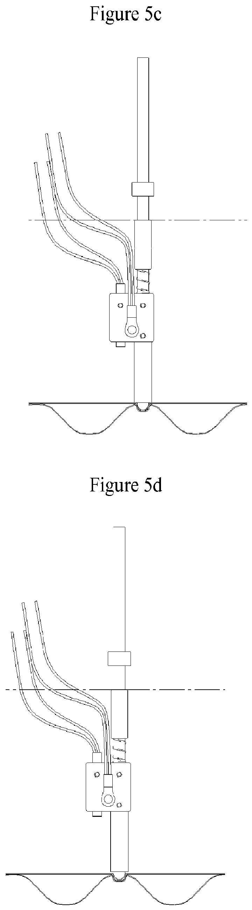

Figure 5c illustrates the heated bonding tip extending down into the fill stack bond point as the sheets are heated. The spring decompresses partially during this step as the tip "melts" down into the bond site, still keeping pressure on the bond. The holding bushing 20 prevents the bonding tip from pushing too far into the fill stack.

Figure 5d illustrates the end of the bond heating cycle. At this point, the bond is melted together. As the fill stack is lowered, a burst of air is injected through the tip which pushes the sheets together and improves the bond strength. This air burst also helps eject the tip from the bond site without sticking. A "bubbled-out" joint can also be provided to enhance the bond, in which the melted bond site is blown into a partial bubble shape as air is injected. The bubble is a larger on the bottom of the joint, which keeps it from pulling out. Some instantaneous cooling may also occur, solidifying the joint.

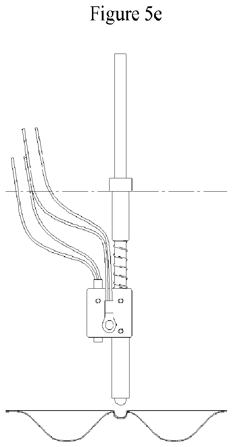

Figure 5e is the last step and corresponds to position 1 of the machine cycle. The tip has been completely removed from the bond site, and the site is allowed to cool.

## Claims

1. A thermal bonding method comprising:
placing alternating film fill sheets (Type A; Type B) on a stack (4);
heating a hemispherical bonding tip (10) to a melting point of the fill sheet;
plunging the bonding tip vertically onto a bond site on the fill sheet;
waiting a specified amount of time for the tip to melt into the fill sheet to a specified depth;
providing a pulse of air through the bonding tip that pushes the melted sheets together; and
removing the bonding tip from the joint.

2. The method of claim 1 with a specified duration for each step, and wherein some steps occur simultaneously.

3. The method of claim 1 wherein a specific pressure and duration of air pulse is provided through the tip (10) to cause the bond site to "bubble-out."

4. A thermal bonding device comprising:
a hemispherical bonding tip (10) extending through an insulating bushing (20);
a heater block (30) to provide the temperature necessary to heat the bonding tip to a level near a melting point of the fill sheet (Type A; Type B);
a spring mechanism (70) attached to the bonding tip to provide a resistance force;
a sliding mechanism (50) allowing the bonding tip to move vertically; and
an air conduit (40) to provide a pulse of air to the bond zone.

5. The device of claim 4 further comprising a ship's hull shaped tip (10).

6. The device of claim 4 further comprising a weight to provide resistance to the bond tip.

7. The device of claim 4 comprising a non-cylindrical insulating bushing shape.

## Patentansprüche

1. Thermisches Haftungsverfahren, das Folgendes umfasst:
Platzieren alternierender Folienfüllkörperplatten (Typ A; Typ B) auf einem Stapel (4);
Erwärmen einer halbkugelförmigen Haftungsspitze (10) auf einen Schmelzpunkt der Füllkörperplatte;
Absenken der Haftungsspitze vertikal auf eine Haftungsstelle auf der Füllkörperplatte;
Warten für eine spezielle Zeitmenge, damit die Spitze in die Füllkörperplatte bis zu einer spezifizierten Tiefe schmilzt;
Bereitstellen eines Luftpulses durch die Haftungsspitze, der die geschmolzenen Platten aneinanderdrückt; und
Entfernen der Haftungsspitze von der Verbindung.

2. Verfahren nach Anspruch 1 mit einer spezifizierten Dauer für jeden Schritt, und wobei manche Schritte gleichzeitig stattfinden.

3. Verfahren nach Anspruch 1, wobei ein spezifischer Druck und eine spezifische Dauer eines Luftpulses durch die Spitze (10) bereitgestellt werden, um zu bewirken, dass die Haftungsstelle "heraussprudelt".

4. Thermische Haftungsvorrichtung, die Folgendes umfasst:
eine halbkugelförmige Haftungsspitze (10), die sich durch eine Isolationsbuchse (20) erstreckt;
einen Heizblock (30) zum Bereitstellen der Temperatur, die zum Erwärmen der Haftungsspitze auf ein Niveau nahe einem Schmelzpunkt der Füllkörperplatte (Typ A, Typ B) notwendig ist;
einen Federmechanismus (70), der an der Haftungsspitze angebracht ist, zum Bereitstellen einer Widerstandskraft;
einen Gleitmechanismus (50), der ermöglicht, dass sich die Haftungsspitze vertikal bewegt; und
eine Luftleitung (40), zum Liefern eines Luftpulses zu der Haftungszone.

5. Vorrichtung nach Anspruch 4, die ferner eine Spitze (10) in Form eines Schiffrumpfes umfasst.

6. Vorrichtung nach Anspruch 4, die ferner ein Gewicht zum Bereitstellen eines Widerstands zu der Haftungsspitze umfasst.

7. Vorrichtung nach Anspruch 4, die eine nichtzylindrische Isolationsbuchsenform umfasst.

## Revendications

1. Procédé de liage thermique comprenant :
le positionnement de feuilles de garnissage alternées (Type A ; Type B) sur une pile (4) ;
le chauffage d'une pointe de liage hémisphérique (10) jusqu'à un point de fusion de la feuille de garnissage ;
l'abaissement de la pointe de liage verticalement sur un site de liage sur la feuille de garnissage ;
l'attente d'une quantité de temps spécifiée pour que la pointe fasse fondre la feuille de garnissage jusqu'à une profondeur spécifiée ;
l'application d'une impulsion d'air par la pointe de liage qui pousse les feuilles fondues ensemble ; et
le retrait de la pointe de liage du joint.

2. Procédé de la revendication 1 avec une durée spécifiée pour chaque étape, et dans lequel certaines étapes se produisent simultanément.

3. Procédé de la revendication 1 dans lequel une pression et une durée d'impulsion d'air spécifiques sont appliquées par la pointe (10) pour faire « buller » le site de liage.

4. Dispositif de liage thermique comprenant :
une pointe de liage hémisphérique (10) s'étendant à travers une traversée isolante (20) ;
un bloc de chauffage (30) pour fournir la température nécessaire pour chauffer la pointe de liage jusqu'à un niveau proche d'un point de fusion de la feuille de garnissage (Type A ; Type B) ;
un mécanisme à ressort (70) attaché à la pointe de liage pour appliquer une force de résistance ;
un mécanisme de glissement (50) permettant à la pointe de liage de se déplacer verticalement ; et
un conduit d'air (40) pour appliquer une impulsion d'air à la zone de liage.

5. Dispositif de la revendication 4 comprenant en outre une pointe en forme de coque de bateau (10).

6. Dispositif de la revendication 4 comprenant en outre un poids pour appliquer une résistance à la pointe de liage.

7. Dispositif de la revendication 4 comprenant une forme de traversée isolante non cylindrique.
